(19) Europäisches Patentamt
European Patent Office
Office européen des brevets

(11) **EP 1 980 387 B1**

(12) **EUROPEAN PATENT SPECIFICATION**

(45) Date of publication and mention
of the grant of the patent:
**09.12.2009 Bulletin 2009/50**

(51) Int Cl.:
***B29C 55/08*** *(2006.01)*     ***G01N 21/89*** *(2006.01)*
***G01N 33/44*** *(2006.01)*

(21) Application number: **07007444.8**

(22) Date of filing: **11.04.2007**

(54) **Process and apparatus for determining the bowing value of an oriented polymer film, and polymer film orientation process including the determination of the bowing value**

Verfahren und Vorrichtung zum Bestimmen des Krümmungswertes einer orientierten Polymerfolie und Verfahren zur Orientierung einer Polymerfolie mit Bestimmung des Krümmungswertes

Procédé et appareil pour la détermination de la valeur de cambrure d'un film polymère orienté et procédé d'orientation de film polymère incluant la détermination de la valeur de cambrure

(84) Designated Contracting States:
**AT BE BG CH CY CZ DE DK EE ES FI FR GB GR HU IE IS IT LI LT LU LV MC MT NL PL PT RO SE SI SK TR**

(74) Representative: **Koepe, Gerd L.**
**Koepe & Partner**
**Robert-Koch-Strasse 1**
**80538 München (DE)**

(43) Date of publication of application:
**15.10.2008 Bulletin 2008/42**

(56) References cited:
**EP-A2- 0 764 678**     **US-A- 5 778 724**

(73) Proprietor: **DMT Technology GmbH**
**5020 Salzburg (AT)**

• **TOSHIRO YAMADA ET AL: "An Attempt to Simulate the Bowing Phenomenon in Tenter with Simple Models" JOURNAL OF APPLIED POLYMER SCIENCE, vol. 48, 1993, pages 1399-1408, XP002449074**

(72) Inventor: **Pinegger, Wolfgang**
**83250 Marquartstein (DE)**

**Description**

The present invention relates to a process and an apparatus for determining the bowing value of an oriented polymer film. The invention also relates to a process for orienting a polymer film which process includes the determination of the bowing value.

The first step of an overall process of fabricating monoaxially oriented films or biaxially oriented films, particularly of films comprising polymer materials, is an extrusion, through a die, of a film of a molten polymer onto a roll ("chill roll") the surface of which is kept at a temperature below the glass transition temperature of the respective polymer. The roll surface quenches the polymer into an amorphous state.

A subsequent step of said process comprises steps of stretching the film previously generated by well-known methods in the longitudinal (machine) direction and/or in the transverse direction, the latter being a stretching step in a direction perpendicular to the machine direction, commonly. These stretching steps may be performed alone or may be performed one after the other or may be performed simultaneously. In the latter case, a stretching action in the longitudinal (machine) direction and transverse direction needs the simultaneous application of stretching forces to the film material in two directions (usually perpendicular to each other), while the film is moving with high speed along a moving path of the film on a stretching device.

Once the drawing step(s) is/are completed, the drawn polymer film is "heat set" or crystallized under tension and with a temperature gradient starting at elevated temperatures and continuing to decreased temperatures. The heat setting step prevents the film from shrinking back to its unstretched shape and locks the molecular orientation in the polymer film plane. The orientation of the polymer molecule chains thus obtained is responsible for the high strength and stiffness of the oriented film.

Together with the molecular orientation, the formation of polymer crystal nuclei is induced. The crystallites grow rapidly and reach the boundary of neighbouring crystallites. Their size is smaller than the wavelength of the visible light. As a result, monoaxially or biaxially oriented polymer films have an excellent clarity, despite its semi-crystalline structure.

However, the clarity of the polymer film, as well as other (including mechanical) properties of the oriented polymer film may be influenced or even deteriorated in the course of the drawing step, particularly in the course of drawing the polymer film in the transverse direction. In accordance with "O Ok Park et al., Analysis of the bowing phenomenon in the tenter process of biaxially oriented polypropylene film"; in "Korean J. Chem. Eng. 18 (3) (2001), 317 to 321", the step of transverse orientation of a polymer film in the transverse stretching zone induces mechanical and geometrical anisotropy along the transverse direction. The result are problems in printing on such oriented films or the appearance of curls when using such films in the bagging process for packaging. The phenomenon as such is called the "geometrical bowing" phenomenon or, shortly, the "bowing" phenomenon (see O Ok Park et al.; loc. Cit., page 317).

The present invention is not dedicated already to any steps of alleviating the bowing phenomenon in general, but is mainly directed to make determinable the occurrence of the bowing phenomenon and its extent in a certain case of orienting a certain polymer film on one certain stretching plant.

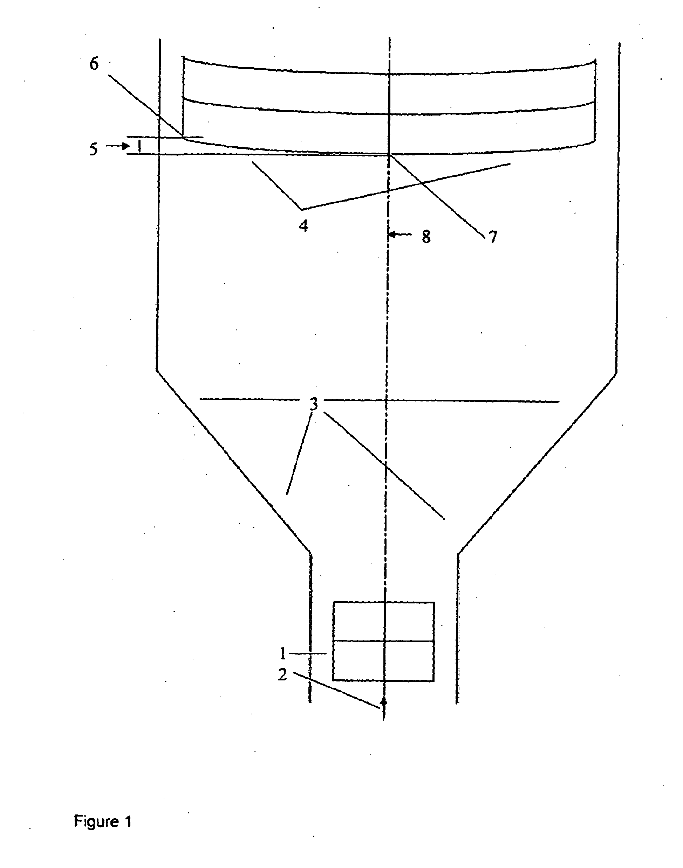

Present proposals for determining the bowing phenomenon have resulted into a complicated, imprecise and discontinuous determination thereof. This can be seen from Figure 1. In the course of the continuous operation of the stretching plant, the film was marked with a straight line or rectangular pattern 1 by hand after the step of orienting the polymer film in the machine direction (represented by the arrow 2 in Figure 1), but before the transverse orientation step, and the transverse orientation step was performed in the transverse stretching zone 3 as usual. At a suitable location downstream the polymer film moving path, where the transverse orientation of the film was terminated, that part of the film showing the "oriented" or "stretched" mark or pattern 4 on the film surface was determined by viewing, the mark was cut away from the continuous polymer film web, and the orientation process was continued. From the "oriented" or "stretched" mark 4 on the polymer film surface, the extent of the bowing phenomenon could be determined, for example by calculation of a bowing percentage value (see Figure 1): The "edges" 6 of the stretched pattern 4 close to the edges of the oriented polymer film are advanced into the machine direction by the orientation step slightly more than the center part 7 of the stretched pattern 4 close to the central line 8 of the stretching plant. The difference of the movement (in the machine direction) is shown in Figure 1 as the "over-length" 5, which is the basis for the bowing value calculation by the equation (1):

$$\text{Bowing value (\%) = over-length x 100 / film width} \qquad (1)$$

The striking disadvantage of said prior art calculation of the bowing value was that it was necessary to discontinue the winding of the film and change to a new winding core, unwind the part of the oriented film showing the "stretched" mark 4 on its surface from the winding roll, cut away the part of the film showing the "stretched" mark 4, and evaluate the bowing value from the marked polymer film piece obtained. Such procedure markedly reduces the economic working in the overall orientation process and, moreover, is very cumbersome. In addition, the marked part of the polymer film had to be discarded since it could not be used for the intended purposes, e. g. for packaging.

The document EP 0 764 678 A2 relates to a thermoplastic resin film possessing uniform physical and chemical properties in the transverse direction of the film and relates to a method for producing a thermoplastic resin film possessing uniform physical and chemical properties in the transverse direction by suppressing the bowing phenomenon which occurs in the process of transverse drawing.

In view of such a complicated prior art procedure, it was an object of the present invention to alleviate the disadvantages connected to the prior art determination of the bowing phenomenon. Moreover, it was an object of the present invention to provide a bowing value determination process and apparatus which allows a continuous determination of the bowing phenomenon without interruption of the winding process. In addition, it was an object of the present invention to provide a bowing value determination process which can be performed automatically and with a high precision on the surface of the rapidly moving polymer film subjected to the orientation process. Moreover, it was an object of the present invention to provide an apparatus allowing such an automatic and high precision bowing value determination in combination with the high-speed operation of the usual stretching plants. Other objects and advantages can be learnt from the subsequent detailed description of the invention.

Specifically, the invention relates to a process for determining the bowing value of an oriented polymer film in the course, and without interruption, of a process of at least transversely orienting said polymer film on a plant for at least transversely orienting said film, said process comprising the steps of

(a) marking, the latest before the transverse orientation step, at least one surface of the polymer film with a pattern of bowing marks allowing to recognize a geometric pattern;

(b) orienting said polymer film at least in the transverse direction;

(c) passing said at least one surface of the oriented polymer film along a determination means capable of recognizing a geometric pattern of bowing marks on said at least one surface;

(d) making said determination means recognize and receive said geometric pattern of bowing marks;

(e) continuing and terminating said transverse orientation step of the polymer film; and

(f) converting said geometric pattern of bowing marks recognized and received by the determination means into geometric bowing mark pattern data.

In a preferred embodiment, the above process further comprises the steps of

(g) comparing said geometric bowing pattern data with data obtained from former steps of recognizing geometric patterns of bowing marks and/or with data representing an optimum geometric pattern of bowing marks; and

(h) controlling the process of orienting the polymer film in accordance with the data comparison step.

Further preferred embodiments of the above process are claimed in the dependent claims 3 to 12.

The invention also relates to an apparatus for determining the bowing value of an oriented polymer film in the course, and without interruption, of a process of at least transversely orienting said polymer film on a plant for at least transversely orienting said film, said apparatus comprising, in addition to the equipment for at least transversely orienting said polymer film,

(a) means for marking at least one surface of said polymer film with a pattern of bowing marks allowing to recognize a geometric pattern;

(b) means for determining, on said at least one surface of the oriented film, said geometric pattern of bowing marks by recognizing and receiving said pattern; and

(c) means for converting said geometric pattern of bowing marks recognized and received by the determination means into geometric bowing mark pattern data.

In a preferred embodiment, the above apparatus further comprises

(d) means for comparing said geometric bowing pattern data with data obtained from former steps of recognizing geometric patterns of bowing marks and/or with data representing an optimum geometric pattern of bowing marks; and

(e) means for controlling the process of orienting the polymer film in accordance with the data received from the data comparison means.

Further preferred embodiments of the apparatus are claimed in dependent claims 15 to 21.

Moreover, the invention also relates to a method for orienting a polymer film web at least in the transverse direction, said method comprising the steps of

- feeding a prepared polymer film web into a stretching device allowing the movement of a polymer film web along a longitudinal path in said device while being oriented;

- providing heating means along said longitudinal path in said device capable of establishing the temperature needed for the orientation step and allowing them to heat the polymer film web while passing the heating means;

- allowing a number of pairs of clip systems adapted to run along said longitudinal path on two guide rails extending substantially longitudinally of the stretching device and substantially parallel to the moving polymer film web on both sides thereof and capable of grasping said polymer film at its two opposed edges, to grasp said polymer film web at two opposite sides thereof and to move said polymer film web along its path while exerting a stretching action on it, thereby at least transversely orienting said polymer film, optionally followed by a step of fixation of the oriented polymer film;

- removing the oriented film web from the stretching device,

wherein said method further comprises the steps of

(a) marking, the latest before the transverse orientation step, at least one surface of the polymer film with a pattern of bowing marks allowing to recognize a geometric pattern;

(b) passing said at least one surface of the oriented polymer film along a determination means capable of recognizing a geometric pattern of bowing marks on said at least one surface;

(c) making said determination means recognize and receive said geometric pattern of bowing marks; and

(d) converting said geometric pattern of bowing marks recognized and received by the determination means into geometric bowing mark pattern data.

In a preferred embodiment, said method for orienting a polymer film web further comprises the steps of

(e) comparing said geometric bowing pattern data with data obtained from former steps of recognizing geometric patterns of bowing marks and/or with data representing an optimum geometric pattern of bowing marks; and
(f) controlling the process of orienting the polymer film in accordance with the data comparison step.

Further preferred embodiments are claimed in dependent claims 24 and 25.
The invention is now further described by referring to the Figures. In the Figures,

Figure 1 is a schematic general explanation of the bowing phenomenon;

Figure 2 is a schematic explanation of the apparatus of the present invention.

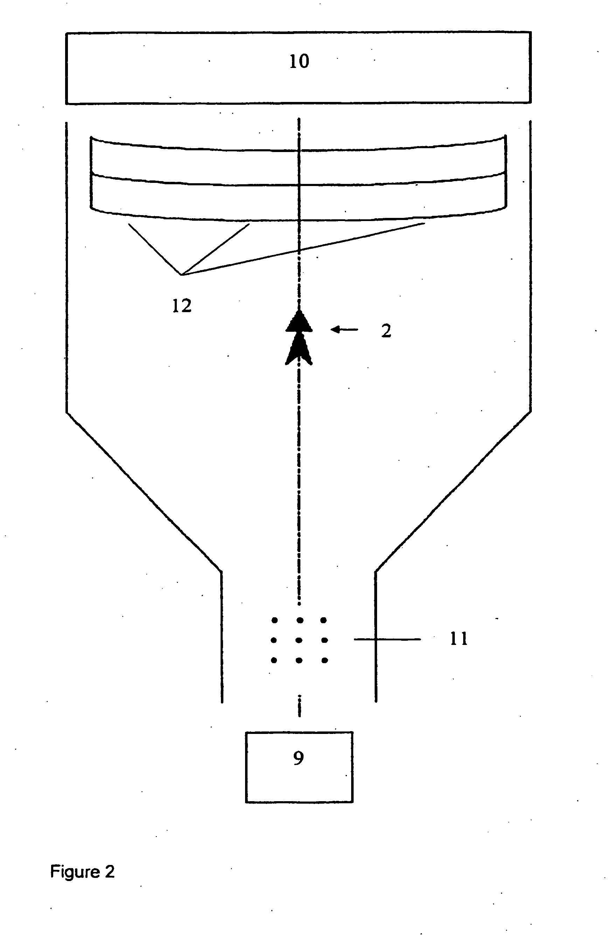

When in the following describing the present invention in more detail, the description is understood as relating to specific embodiments of the invention only and should not be construed to relate to any restriction of the broad concept of the invention. Also the preferred embodiments explained below and shown in the Figures are given only for explanatory purposes and are in no way restricting the invention.
Reference is now made to Figure 2, although the process for determining the bowing value is explained first.
The term "bowing value" as used in the present description and in the claims is understood to mean the value of the equation (1) given above, i. e. a percentage value calculated (or calculatable) from the overlength determined from the process of the invention, divided by the width of the polymer film web and multiplied by 100. The bowing value largely depends on the material of the polymer film oriented, as well as on the orienting conditions (drawing ratio, temperature, and other parameters) and usually ranges between 0 % and 50 %, more preferably between 0 % and 10 %.

The term "material web", as used in the present specification and claims, is defined to broadly relate to a flat piece of a material which has a sufficient size to be processed in a stretching device. Particularly, the length of said flat piece (e. g. sheet, film, etc.) of material is long enough to be fed into the stretching device, processed therein and taken up after processing by suitable means, e. g. take-up rollers, and the width of said flat piece of material is large enough to be grasped by clip systems commonly used for the orientation step. Exemplary, but not restricting examples of such a material web are webs made of polymer films and having the length and width needed for processing in a stretching device. In the present invention, polymer films are the preferred material webs and may have a width of between 0.1 and 5 meters (m), preferably between 0.5 and 2 m.

The term "film web", as used in the present specification and claims, is used in a similar manner as the term "material web" defined above. As will be acknowledged by a person skilled in the art, the film web will define webs having a relatively low thickness. This may be exemplified by polymer films, which are prepared, in process steps known per se and conducted before the present (stretching) processing, by processes exemplified by (but not restricted to) extrusion, blowing, casting, rolling or calendering or similar film forming techniques in a thickness of between 1 $\mu$m and 10,000 $\mu$m, preferably in a thickness of between 100 $\mu$m and 2,500 $\mu$m. Such films, due to their low thickness, already have a certain transparency to visible light and a number of further desired properties, as, for example, strength, porosity, permeability or impermeability (e. g. for gases) etc., which might be changed by the stretching step of the invention.

Such films are usually made of polymer materials. While not restricting the present invention to those, examples of such polymer materials are selected from polypropylene (PP), polyethylene (PE), polyvinyl chloride (PVC), polystyrene (PS), polyamide (PA), polycarbonate (PC), polylactic acid (PLA), polyethylene naphthalate (PEN) and polyethylene terephthalate (PETP) and their copolymers and blends, but the invention is, of course, not restricted to the above mentioned materials. Particularly preferred polymer materials to be processed in accordance with the present invention are polypropylene (PP), polyethylene (PE), polyvinyl chloride (PVC), polystyrene (PS), polyamide (PA) and polyethylene terephthalate (PETP).

In contrast to the prior art processes, the bowing value is determined in the course of the process of at least transversely orienting a polymer film web. Exactly speaking, the preparation for the determination of the bowing value is made at stage the latest before the transverse orientation step, as will be explained below in detail, and the determination of the bowing value in the narrower sense is made after said transverse orientation step by comparing to the situation before the transverse orientation step. When determining the bowing value, the orientation step is neither decelerated not even stopped, but the orientation process is conducted without interruption in accordance with the present invention.

The stretching plant used for the present process, and also for the present method of orienting a polymer film web while determining the bowing value, is a usual stretching plant or stretching machine. Such plants/machines are widely known in this technical field, and it is one of the advantages of the present invention that the determination of the bowing value needs no new stretching plants or stretching machines; the means used for the determination may be added to any conventional plant or machine without that severe changes are necessary. This is advantageous not only in view of the fact that the existing equipment may be continued to be used, but also due to the fact that no new installation of the plant or equipment and no activity in adapting the running plant to the determination of the bowing value is needed. Quite to the contrary: Due to the fact that the present apparatus and method can be used, the winding process needs not to be interrupted or decelerated, but it can be continued without interruption, without cutting out a part of the polymer film web already oriented, and without changing the roll on winder.

In a preferred embodiment of the invention, the process may be a process of monoaxially orienting the polymer film, e. g. in the transverse direction; the "transverse" direction, as conventionally defined, is the direction of (orientation) treatment of the polymer film web which is in a certain angle, usually 90°, to the direction into which the polymer film web is moving along its path on the orientation plant or machine, i. e. direction in an angle of 90 ° to the direction given in Figure 1 by the arrow 2. In accordance with another preferred embodiment of the invention, the process may be a process of biaxially orienting the polymer film web. As per the usual definition, the two axes of orientation, in a case of biaxially orienting the polymer film, are in an angle of substantially 90 ° to each other, wherein the first orientation step is usually the step of orientation in the machine direction (equal to the direction of the arrow 2 in Figure 1), and the second orientation step is the step of orienting the polymer film web in the transverse direction. It is, however, also within the scope of the present invention that, in a biaxial orientation process, the transverse direction orientation is carried out first, followed by an orientation step in the machine direction, or that the biaxial orientation process is a process of simultaneously orienting the polymer film in both directions. Preferred are biaxial orientation processes having the order of first orienting the polymer film web in the machine direction, followed by the orientation thereof in the transverse direction.

In accordance with the present invention, the process for determining the bowing value of an oriented polymer

EP 1 980 387 B1

film web comprises the first step of marking, the latest before the transverse orientation step, at least one surface of the polymer film web with a pattern of bowing marks allowing to recognize a geometric pattern. The term "at least one surface", as used in the present specification and claims, means that either one surface of the polymer film web is marked, or two surfaces are marked, said one or two surface(s) being the upper and lower surfaces of the polymer film web, viewed during the operation of the orientation process, which face the viewer from above, or which are opposite, i. e. show away from the viewer. In a preferred embodiment of the process of the invention, one of the surfaces of the polymer film web is marked with said pattern of bowing marks, and in an even more preferred embodiment, said one surface is the surface facing the viewer from above.

In accordance with the present invention, the marking step is carried out the latest before the transverse orientation step. The term "the latest before the orientation step", when used in the present specification and in the claims, means that the polymer film web is marked at any stage of the orientation proceedings, before the film is oriented in the transverse direction, but the marks are applied in any case before conducting a transverse orientation step the first time.

In a preferred embodiment of the invention, the marking step is carried out by at least one mark recognizable by optical means. There may be applied one mark, or there may be applied a plurality of marks. In the latter case, the plurality of marks represents a certain marking pattern which, in accordance with the invention, experiences a change in the course of transversely orienting the polymer film web. The comparison of the geometric pattern of marks before the orientation step to the geometric pattern after the orientation step allows the bowing value to be determined appropriately. There is no restriction on the nature of marks applied to the at least one polymer film surface and recognizable by optical means, and a person skilled in the present field will be able to select marks recognizable by optical means in an appropriate manner and in accordance with the process parameters applicable here. The mark(s) may have the shape of lines or a plurality of lines in the form of a geometric figure, as it was found in the prior art. Preferably, the pattern of marks comprises dots of large, medium or small, even minute, size which, together, allow the recognition of a pattern as well as of the change of the pattern. In particularly preferred embodiments of the invention, the dots have a size in the range of 0.01 to 10 mm, more preferably in the size of 0.10 to 2 mm, but the invention is not restricted to dots of said size.

Preferred embodiments of the process of this invention relate to the application of one mark or several marks of a printing ink comprising at least one dye recognizable in the visible range of the actinic light spectrum, i. e. of a printing ink comprising one or more than one dye/dyes having an emission line (or several emission lines) in the wavelength range of from about 400 to 800 nm. There may be contained one dye, or there may be contained two or several dyes Such printing inks the colour of which - due to the dye(s) contained therein - is recognizable in the visible range are well known, are commercially available in a large number and with many different dyes or combinations of dyes resulting into many shades of colours, and they may be selected by a skilled person without restriction in accordance with the requirements. Examples are printing inks available for usual inkjet printers which may be applied to at least one surface of the polymer film in any desired pattern including a geometric bowing mark pattern, for example in the form of dots of a diameter in the range of 0.01 to 10 mm.

In another preferred embodiment of the invention, the marking step is carried out - alternatively or in combination - with at least one dye recognizable in the non-visible range of the actinic light spectrum. There may be used one dye, or there may be used two or more dyes, and the compositions comprising such dye(s) may have any suitable composition for the intended purpose, i. e. the application to at least one surface of the polymer film. Particularly preferred dyes are those dyes having at least one emission line in the ultraviolet (UV) range of the actinic light spectrum, i. e. within a wavelength range of < 400 nm to 50 nm, or are those dyes having at least one emission line in the fluorescence range (either optical fluorescence or radiofluorescence), for example within a wavelength range of from > 250 to 500 nm or those dyes (elements, compounds) having at least one emission line in the radioactive radiation range. Examples are solutions (for example in a rapidly drying solvent) or pastes of UV emission dyes, fluorescent dyes or radioactivity-emitting elements or compounds which are available to a skilled person and may be selected by said skilled person in accordance with the requirements without exerting an inventive activity.

In another preferred embodiment of the invention, the marking step is carried out - alternatively or in combination - with at least one dye activatable by light of the actinic light spectrum and emitting radiation in the same or in a different range of the actinic light spectrum. There may be used one dye, or there may be used two or more dyes, and the compositions comprising such dye(s) may have any suitable composition for the intended purpose, i. e. the application to at least one surface of the polymer film. Particularly preferred dyes are those dyes which may be activated by an irradiation with light of a specific wavelength of the actinic light spectrum adapted to effect an optimized activation with a minimum of activation energy, and the activated dye compound(s) emit(s) light of a predetermined wavelength or wavelength range of the actinic light spectrum optimally adapted to the determination of the bowing marks in the subsequent process step. Typical examples are fluorescent dyes.

While printing inks recognizable in the visible range of the actinic light spectrum preferably are applied to the at least one surface of the polymer film web in the least-possible amount since they can also be recognized visually

6

when looking to the mark applied with the naked eye, dye(s) emitting light in the non-visible range of the may be applied to the at least one surface of the polymer film in a larger amount, i. e. in the form or larger dots or a larger number of dots forming a geometrical pattern, since it/they cannot be perceived visually by the naked eye. Particularly those dyes with an emission in the non-visible range of the actinic light spectrum which have to be activated before they emit light recognizable in the non-visible range of the actinic light spectrum are advantageous and, hence, are particularly preferred.

In the latter case, the process of the invention preferably comprises the step of separately activating the activatable dye(s) by irradiating it/them, before, during or after their application onto the at least one surface of the polymer film web with a separate light source the irradiation wavelength of which is closely or even exactly adapted to the activation wavelength of the activatable dye(s) used. In such a case, due to the use of light of a specific wavelength of the actinic light spectrum, the irradiation of activating light is adapted to effect an optimized activation with a minimum of activation energy, advantageously. As a result, the activated dye compound(s) emit(s) light of a predetermined wavelength or wavelength range of the actinic light spectrum optimally adapted to the later determination of the bowing marks.

In another preferred embodiment of the invention, the marking step is carried out with a mark recognizable by magnetic means. There is no general restriction on such marks, and the marking step may be carried out with any material resulting in a mark recognizable by magnetic means. In even more preferred embodiments of the invention, the marking step may be carried out with a magnetic metal powder or with a magnetic metal alloy powder or with a magnetic metal dust or metal alloy dust. Specific (although not restricting) examples of metals of a magnetic metal powder are iron powder or iron dust, steel powder or steel dust, as examples for magnetic soft materials; or powder, particles and/or dust of AlNiCo, NdFeB and/or SmCo as examples for magnetically hard materials.

Independent of the materials used for the application of marks to be recognized later by corresponding determination means, it is one of the preferred embodiments of the invention that the pattern of bowing marks applied onto at least one of the surfaces of the polymer film web in regular distances is a pattern of a minimum number of dots defining a geometric pattern. In contrast to the prior art where the full geometric pattern was applied onto the surface of the polymer film, the present invention proposes that only a minimum number of dots necessary to define a geometric pattern be applied for marking for determining the bowing value. Any desirable minimum number of dots may be selected and applied without restriction, and such dots of the set of dots necessary are only restricted by the requirement that they must be sufficiently large to allow a determination in the subsequent determination step.

As an example, in a case of defining a line for the determination of the bowing value, the geometric pattern for defining a line allowing the determination of the bowing value is a pattern of at least two dots, alternatively more than two dots to be applied onto at least one surface of the polymer film. Particularly, a pattern of two dots (one adjacent to the edge of the polymer film, another one in the middle, assuming that both edges of the film are proceeding, in the course of the stretching step, simultaneously and with the same speed and stretching force) would be suitable. Another preferred example is the definition of a rectangle or quadrate by a set of at least six dots (at the four corners of the rectangle or quadrate and in the respective middle lines; see Figure 1 on the middle axis 8). These examples are, however, not restricting, and any other geometrical pattern may be selected which allows the determination of the bowing value.

In accordance with a preferred embodiment of the invention, the pattern of bowing marks is applied to one of the surfaces of the polymer film web to be transversely oriented, and the most preferred surface is the one which is the upper surface of the polymer film web, viewed in the orientation operation configuration (i. e. the surface facing the view of a viewer looking to the moving polymer film web from the upper or top side of the stretching plant).

In accordance with the invention, after the step of applying the bowing marks onto the polymer film surface ("marking step"), the orientation of the polymer film web at least in the transverse direction is carried out. The orientation step is not restricted to the transverse direction orientation, and a monoaxial transverse orientation or, alternatively, a biaxial orientation (either first in the machine direction and then in the transverse direction or first in the transverse direction and then in the machine direction) may be carried out, without that the invention is restricted to any of these orientation procedures. Even several orientation steps in either direction (even with angles between the two directions differing from 90 °) and in either order can be carried out, and such orientation steps are covered by the present invention, too.

The next step of the process of the invention is the step of passing said at least one surface of the (transversely) oriented polymer film, which is marked with the bowing marks as described above, on its route along the moving path of a stretching machine or plant, along a determination means capable of recognizing a geometric pattern of bowing marks on said at least one surface. In other words: The determination means will be located downstream of the marking and (at least) transverse orientation stages. The determination means may be positioned above the surface of the polymer film web or may be positioned below the surface of the polymer film web; a skilled person may select the position in accordance with the usual skill arbitrarily. It is preferred that the determination means is positioned above the polymer film surface.

In particularly preferred embodiments of the process of the invention, the selection of the determination means and the previous marking step are adapted to each other in the sense that the determination route of the determination means (e. g. determination of an optically recognizable feature, selection of the wavelength range, or determination of a magnetically recognizable feature, selection of the pole of the magnetism, etc.) is selected appropriately in accordance with the mark applied to the at least one surface of the polymer film web. In even more preferred embodiments of the invention, a light sensor (or more than one light sensor) or, alternatively, a magnetic sensor is used as the determination means. In other particularly preferred embodiments of the invention, a sensor may be selected which is capable of sensing all types of information (including optical information and magnetic information) from the mark(s) passing it on the polymer film web surface. In more preferred embodiments, a camera may be used as the sensor for recognizing optical bowing marks, so as to obtain the advantages of a high accuracy measurement on the polymer film web moving with relatively high speed, which high accuracy measurement is a precondition for a subsequent evaluation or even calculation of the bowing value. In even more preferred embodiments, such a camera may be a usual CCD camera (charge-coupled device), i. e. an image sensor allowing digital processing of images (camera with photographing and/or video function) optionally equipped with a linear sensor or any other sensor to detect marks applied to the polymer film web, for example sensors suitable to detect fluorescent or radioactive marks.

As soon as the mark(s) of the geometric pattern previously applied to the at least one surface of the polymer film web pass(es) the appropriately selected determination means (camera, sensor), the mark(s) is/are recognized by the determination means and are received by it in the sense that the information "sent" by the mark(s) has entered the determination means, where the information may be processed further.

In even more preferred embodiments of the process of the present invention, the determination means is capable, after recognizing and receiving the geometric pattern of bowing marks, of either converting the pattern into pattern data and/or of storing the data received or of transmitting the data to a data storing and/or data conversion and/or data processing unit. This may simply be achieved by providing the determination means with suitable means for a conversion of optical and/or magnetic signals received from the marks on the polymer film surface into electronic signals and/or with suitable means for storing either optical or magnetic or electronic data, for example suitable image processing means and/or software and/or with suitable means for transmitting optical and/or magnetic and/or electronic data to external data storing and/or data conversion and/or data processing units, as for example a computer having the corresponding functional units. In a most preferred embodiment of the invention, the determination means, for example the sensor for radiation of a certain (e. g. UV or fluorescence) wavelength, after recognizing and receiving said geometric pattern of bowing marks, converts said geometric bowing mark pattern into electronic bowing mark pattern data and transmits said data to a data storing and/or data conversion and/or data processing unit as, for example, a computer connected to said determination means and equipped with a suitable software to be able to carry out the desired operations. A person skilled in the present technical field will be able to select and install such functions in a usual way without exerting an inventive step.

While such data recognition, reception, conversion, storage and/or transmission is carried out, the usual transverse orientation step is continued and terminated. The term "continued and terminated", as used in the present specification and claims, is understood to mean that the usual process is neither interrupted nor directed into a different "direction" by the need to apply marks onto the at least one surface of the polymer film web and to recognize, receive and process data received for the determination of the bowing value. Particularly, process steps like a fixation of the orientation of the polymer molecules in the film, quenching of the polymer film, removing the film from the stretching plant, taking up the film on rolls for further processing, transport etc. are conducted without any interruption or change, compared to the usual procedure without the bowing value determination. It is one of the great advantages of the present process that the steps of bowing value determination do not at all influence or even impair the process of orienting the polymer film web.

In accordance with a preferred embodiment of the process of the invention which, however, is not essential and, thus, is not restricting the invention, one or two additional process step(s) is/are included into the overall process, i. e. the steps of

(g) comparing said geometric bowing pattern data with data obtained from former steps of recognizing geometric patterns of bowing marks and/or with data representing an optimum geometric pattern of bowing marks; and/or

(h) controlling the process of orienting the polymer film in accordance with the data comparison step.

In other words: The results obtained from the process carried out as explained above are then put into the connection of data formerly obtained in the same process, for the same polymer, on the same machine and/or under identical or similar conditions, or are connected to desired data of the polymer film web product to be obtained, and the result or results of the comparison(s) made are used for controlling, improving and economizing the process of orienting the polymer film. Hence, the results of an analysis of the data obtained may be used for controlling one single function or several functions or the whole set of functions of the overall process. By such a comparison and control, the bowing value determination step is a step of "learning" how, and into which direction, to improve the overall process with the aim of a better result, i. e. a better polymer film suffering less from the bowing phenomenon. The control exerted on the process after the comparison of data may be a control of any parameter influencing the product quality, for example (but not restricting) an influence on the temperature or temperature distribution at the polymer film surface before, during or after the transverse orientation step, an influence on the forces applied to the polymer film web during the orientation step by the moving clips, an influence on the thickness of the polymer film web, even in certain areas thereof, only, an influence on the moving speed or stretching speed, etc. etc..

It is one of the advantages of the present invention that, in even more preferred embodiments, a usual polymer film web quality control system or polymer film web defect recognition and/or monitoring system, for example a system recognizing polymer film web defects like tears, holes, pinholes and/or polymer granule burns, may be used for the purposes of the present invention. In other words: If such polymer film web defect recognition system works with an optical defect recognition and/or monitoring, such an optical recognition system may appropriately be used also for determining the bowing value in accordance with the above description. In combination with a suitable monitoring of the length of the polymer film web wound on the winding core, the exact location of defects, on the one hand, and bowing marks for determining the bowing value, on the other hand, may be determined.

The invention also relates to an apparatus for determining the bowing value of an oriented polymer film in the course, and without interruption, of a process of at least transversely orienting said polymer film on a plant for at least transversely orienting said film, where said plant for carrying out the orientation of the polymer film web is quite a usual plant having those parts which are present in such plants conventionally. In other words: The present apparatus of the invention can advantageously be used in connection to all existing equipments and plants without that any change is necessary, and can be installed also in new plants without any adaptation problems.

The apparatus of the present invention comprises, in addition to the equipment for at least transversely orienting said polymer film,

(a) means 9 for marking at least one surface of said polymer film with a pattern 11 of bowing marks allowing to recognize a geometric pattern;

(b) means 10 for determining, on said at least one surface of the oriented film, the geometric pattern 12 of bowing marks after stretching by recognizing and receiving said pattern 12; and

(c) means for converting said geometric pattern 12 of stretched bowing marks recognized and received by the determination means into geometric bowing mark pattern data.

With respect to the means mentioned above, reference is made to Figure 2 herein.

The means 9 for marking at least one surface of the polymer film with a pattern 11 of bowing marks allowing to recognize a geometric pattern may be any means suitable for said purpose. In preferred embodiments of the apparatus of the invention, such a means may be a printer by which one mark or several marks or a pattern of marks can be applied onto the at least one surface of the polymer film web. In case that such a printer is used preferably, a mark recognizable by optical means can easily and precisely be applied to the polymer film surface. For example, such a printer may be a usual bubble printer applying a solution containing a dye which may be recognized optically on the polymer film surface. In another example, the printer may be a laser printer which applies a toner dot or a plurality of toner dots onto the polymer film surface which dots, as marks forming a geometrical pattern, may be recognized optically, too.

In even further preferred embodiments of the apparatus of the invention, the printer is a printer for a printing ink recognizable in the visible range of the actinic light spectrum and/or a printer for a dye recognizable in the non-visible range of the actinic light spectrum, preferably in the UV range of the actinic light spectrum, and/or a printer for a dye activatable by light of the actinic light spectrum and emitting radiation in the same or in a different range of the actinic light spectrum, preferably a printer for a composition of a fluorescent dye. For more details on the types of dyes useable in accordance with the printer, reference is made to the above description of the process and of the possible dyes and their use in the process of the invention, which description is fully applicable also in combination with the apparatus preferably used.

In another preferred embodiment of the apparatus of the invention, the apparatus further comprises a separate source emitting light of the actinic light spectrum suitable for activating a dye or several dyes activatable by actinic light spectrum light. Preferably, the position of said source is between the area of application of the bowing marks 11 and the place of determining the pattern 12 after stretching. One example of such a light source is a source emitting light in the visible or UV or x-ray spectrum of light for activating fluorescence dyes, without that the invention is restricted to such a light source. There may also be used sources of energy emitting electron beams for activating a suitable dye. In general, the additional light (or energy) source should be best adapted to the specific activation step needed for a specific dye used in the present invention.

In a further preferred embodiment of the apparatus of the invention, the means for marking is a means for applying a mark recognizable by magnetic means, preferably for applying a magnetic metal powder or for applying a metal alloy powder or for applying a metal/metal alloy dust. For a detailed description of the magnetic recognition of a mark, reference can also be made to the above description of the process of applying a mark, and the features described above are also applicable here with respect to the preferred embodiment of the apparatus of the invention.

A second essential apparatus feature or part is the means 10 for determining said geometric pattern 12 after stretching. The determination means, as a skilled person will acknowledge, has to be selected in accordance with the means used for the application of the mark and, of course, with the marking material applied by the marking means, and *vice versa.* Particularly preferred determination means in accordance with the invention are means for determining optical and/or magnetic signals, and even more preferred determination means are a light sensors and/or magnetic sensors. As already mentioned above in connection to the process of the invention, one example of such determination means, suitable for the recognition of optical data, are a CCD camera in combination with a light sensor for a suitable wavelength of the marking material used, e. g. in combination with a sensor recognizing a fluorescence of a certain wavelength of the bowing mark or a radioactive sensor recognizing radioactivity of the mark applied to the at least one surface of the polymer film. Also in connection to the magnetic sensor means, reference can be made to the above explanation in connection to the process, and the features disclosed and explained there may also be applied in combination with the apparatus of the invention.

In accordance with one preferred embodiment of the invention, the apparatus, in addition to the features described above, comprises

(d) means for comparing said geometric bowing pattern data with data obtained from former steps of recognizing geometric patterns of bowing marks and/or with data representing an optimum geometric pattern of bowing marks; and/or

(e) means for controlling the process of orienting the polymer film in accordance with the data received from the data comparison means.

A further preferred embodiment of the invention is directed to an apparatus having the features described above in detail, which apparatus further comprises a data storing unit and/or a data conversion unit and/or a data processing unit. Such additional functions can be provided, for example, by connecting the apparatus of the invention which applies the bowing value marks to the at least one surface of the polymer film web and the determination means (with its features and functions described above) to a usual computer on which a suitable software is loaded allowing to perform the above data storing and/or data conversion and/or data processing functions. Such type of software may be commercially obtained by a skilled person and can be used for the purposes of the invention by a person having ordinary skill in this technical field.

In another preferred embodiment, the apparatus of the invention may further comprise, in combination to one or all features explained above, means for controlling the overall process, specifically the overall orientation process, on the basis of the data received from the determination means and/or from the data processing unit. By combining the apparatus of the present invention with the process control for the orientation (stretching) plant, the data learnt from the apparatus are useable for controlling, improving and economizing the process of orienting the polymer film. Hence, the results of an analysis of the data obtained may be used for controlling one single function or several functions or the whole set of functions of the plant performing the overall process. By such a comparison and control, the bowing value determination step is a step of "learning" how, and into which direction, to improve the overall process with the aim of a better result, i. e. a better polymer film suffering less from the bowing phenomenon. The control exerted on the process after the comparison of data may be a control of any parameter influencing the product quality, for example (but not restricting) an influence on the temperature or temperature distribution at the polymer film surface before, during or after the transverse orientation step, an influence on the forces applied to the polymer film web during the orientation step by the moving clips, an influence on the thickness of the polymer film web, even in certain areas thereof, only, an influence on the moving speed or stretching speed, etc. etc..

Finally, the invention also relates to a method for orienting a polymer film web at least in the transverse direction, said method being known per se from the prior art as comprising the steps of

- feeding a prepared polymer film web into a stretching device allowing the movement of a polymer film web along a longitudinal path in said device while being oriented;

- providing heating means along said longitudinal path in said device capable of establishing the temperature needed for the orientation step and allowing them to heat the polymer film web while passing the heating means;

- allowing a number of pairs of clip systems adapted to run along said longitudinal path on two guide rails extending substantially longitudinally of the stretching device and substantially parallel to the moving polymer film web on both sides thereof and capable of grasping said polymer film at its two opposed edges, to grasp said polymer film web at two opposite sides thereof and to move said polymer film web along its path while exerting a stretching action on it, thereby at least transversely orienting said polymer film, optionally followed by a step of fixation of the oriented polymer film;

- removing the oriented film web from the stretching device,

for which process steps of orienting the polymer film web any desirable stretching plant having the known equipment may be used, as described above in detail. In accordance with the third aspect of the present invention, said method further comprises the steps of

(a) marking, the latest before the transverse orientation step, at least one surface of the polymer film with a pattern of bowing marks allowing to recognize a geometric pattern;

(b) passing said at least one surface of the oriented polymer film along a determination means capable of recognizing a geometric pattern of bowing marks on said at least one surface;

(c) making said determination means recognize and receive said geometric pattern of bowing marks; and

(d) converting said geometric pattern of bowing marks recognized and received by the determination means into geometric bowing mark pattern data.

With respect to this method, all features already explained above for the process of determining the bowing value can be applied, and single or all features exemplified above may be applied, singly or in combination, to the present method. In particular, the method may additionally comprise the steps of

(e) comparing said geometric bowing pattern data with data obtained from former steps of recognizing geometric patterns of bowing marks and/or with data representing an optimum geometric pattern of bowing marks; and/or

(f) controlling the process of orienting the polymer film in accordance with the data comparison step.

As was explained above already, the present method is applicable to monoaxial or biaxial orientation methods, i. e. the method may be a process of monoaxially orienting the polymer film in the transverse direction, or the method may be a biaxial orientation process of first orienting the polymer film in the machine direction and subsequently orienting the polymer film in the transverse direction, or the method may be a biaxial orientation process of first orienting the polymer film in the transverse direction and subsequently orienting the polymer film in the machine direction, or the method may be a biaxial orientation process of simultaneously orienting the polymer film in both directions.

Having explained the invention in detail above, it is stated that the explanation of the invention by a number of its preferred embodiments is to be understood as explaining the invention by means of examples, which should not be construed to restrict the invention to these examples.

## Claims

1. A process for determining the bowing value of an oriented polymer film in the course, and without interruption, of a process of at least transversely orienting said polymer film on a plant for at least transversely orienting said film, said process comprising the steps of

(a) marking, the latest before the transverse orientation step, at least one surface of the polymer film with a pattern of bowing marks allowing to recognize a geometric pattern;
(b) orienting said polymer film at least in the transverse direction;
(c) passing said at least one surface of the oriented polymer film along a determination means capable of recognizing a geometric pattern of bowing marks on said at least one surface;
(d) making said determination means recognize and receive said geometric pattern of bowing marks;
(e) continuing and terminating said transverse orientation step of the polymer film; and
(f) converting said geometric pattern of bowing marks recognized and received by the determination means into geometric bowing mark pattern data.

**2.** The process of determining the bowing value according to claim 1, said process further comprising the steps of

(g) comparing said geometric bowing pattern data with data obtained from former steps of recognizing geometric patterns of bowing marks and/or with data representing an optimum geometric pattern of bowing marks; and/or
(h) controlling the process of orienting the polymer film in accordance with the data comparison step.

**3.** The process of determining the bowing value according to claim 1 or claim 2, which process is a process of monoaxially orienting the polymer film in the transverse direction, or which process is a biaxial orientation process of first orienting the polymer film in the machine direction and subsequently orienting the polymer film in the transverse direction, or which process is a biaxial orientation process of first orienting the polymer film in the transverse direction and subsequently orienting the polymer film in the machine direction, or which process is a biaxial orientation process of simultaneously orienting the polymer film in both the machine and transverse directions.

**4.** The process of determining the bowing value according to any of the claims 1 to 3, wherein the marking step is carried out with at least one mark recognizable by optical means.

**5.** The process of determining the bowing value according to any of the claims 1 to 4, wherein the marking step is carried out with a printing ink comprising at least one dye recognizable in the visible range of the actinic light spectrum and/or with at least one dye recognizable in the non-visible range of the actinic light spectrum, preferably in the UV range of the actinic light spectrum, and/or with at least one dye activatable by light of the actinic light spectrum and emitting radiation in the same or in a different range of the actinic light spectrum.

**6.** The process of determining the bowing value according to any of the claims 1 to 5, wherein a separate source emitting light of the actinic light spectrum is used for activating a dye activatable by actinic light spectrum light.

**7.** The process of determining the bowing value according to any of the claims 1 to 3, wherein the marking step is carried out with at least one mark recognizable by magnetic means.

**8.** The process according to any of the claims 1 to 3 and 7, wherein the marking step is carried out with a magnetic metal powder or with a magnetic metal alloy powder or with a magnetic metal/metal alloy dust.

**9.** The process of determining the bowing value according to any of the claims 1 to 8, wherein the pattern of bowing marks is a pattern of a minimum number of dots defining a geometric pattern, preferably wherein the pattern of bowing marks is a pattern of at least three or more dots defining a line or is a pattern of at least six or more dots defining a rectangle or a quadrate.

**10.** The process of determining the bowing value according to any of the claims 1 to 9, wherein the pattern of bowing marks is applied to one surface of the polymer film to be transversely oriented, preferably wherein the pattern of bowing marks is applied to the upper surface of the polymer film, viewed in the orientation operation configuration.

**11.** The process of determining the bowing value according to any of the claims 1 to 10, wherein a means for determining optical and/or magnetic signals is used as the determination means, preferably wherein a light sensor and/or magnetic sensor is used as the determination means.

**12.** The process for determining the bowing value according to any of the claims 1 to 11, wherein the determination means is capable, after recognizing and receiving the geometric pattern of bowing marks, of either converting the pattern into pattern data and/or of storing the data received or of transmitting the data to a data storing and/or data conversion and/or data processing unit, preferably wherein the determination means, after recognizing and receiving said geometric pattern of bowing marks, converts said geometric bowing mark pattern into bowing mark pattern data and transmits said data to a data storing and/or data conversion and/or data processing unit.

**13.** An apparatus for determining the bowing value of an oriented polymer film in the course, and without interruption, of a process of at least transversely orienting said polymer film on a plant for at least transversely orienting said film, said apparatus comprising, in addition to the equipment for at least transversely orienting said polymer film,

(a) means for marking at least one surface of said polymer film with a pattern of bowing marks allowing to recognize a geometric pattern;
(b) means for determining, on said at least one surface of the oriented film, said geometric pattern of bowing marks by recognizing and receiving said pattern; and

(c) means for converting said geometric pattern of bowing marks recognized and received by the determination means into geometric bowing mark pattern data.

**14.** The apparatus according to claim 13, said apparatus further comprising

(d) means for comparing said geometric bowing pattern data with data obtained from former steps of recognizing geometric patterns of bowing marks and/or with data representing an optimum geometric pattern of bowing marks; and/or
(e) means for controlling the process of orienting the polymer film in accordance with the data received from the data comparison means.

**15.** The apparatus according to claim 13 and claim 14, wherein the means for marking is a printer capable of applying a mark recognizable by optical means.

**16.** The apparatus according to any of the claims 13 to 15, wherein the printer is a printer for a printing ink recognizable in the visible range of the actinic light spectrum and/or a printer for a dye recognizable in the non-visible range of the actinic light spectrum, preferably in the UV range of the actinic light spectrum, and/or a printer for a dye activatable by light of the actinic light spectrum and emitting radiation in the same or in a different range of the actinic light spectrum.

**17.** The apparatus according to any of the claims 13 to 16, further comprising a separate source emitting light of the actinic light spectrum for activating a dye activatable by actinic light spectrum light.

**18.** The apparatus according to claims 13 and claim 14, wherein the means for marking is a means for applying a mark recognizable by magnetic means, preferably for applying a magnetic metal powder or for applying a metal alloy powder or for applying a metal/metal alloy dust.

**19.** The apparatus according to any of claims 13 to 18, wherein the determination means is a means for determining optical and/or magnetic signals, preferably wherein the determination means is a light sensor and/or magnetic sensor.

**20.** The apparatus according to any of the claims 13 to 19, further comprising a data storing unit and/or a data conversion unit and/or a data processing unit.

**21.** The apparatus according to any of the claims 13 to 20, further comprising means for controlling the overall process on the basis of the data received from the determination means and/or from the data processing unit.

**22.** A method for orienting a polymer film web at least in the transverse direction, said method comprising the steps of

- feeding a prepared polymer film web into a stretching device allowing the movement of a polymer film web along a longitudinal path in said device while being oriented;
- providing heating means along said longitudinal path in said device capable of establishing the temperature needed for the orientation step and allowing them to heat the polymer film web while passing the heating means;
- allowing a number of pairs of clip systems adapted to run along said longitudinal path on two guide rails extending substantially longitudinally of the stretching device and substantially parallel to the moving polymer film web on both sides thereof and capable of grasping said polymer film at its two opposed edges, to grasp said polymer film web at two opposite sides thereof and to move said polymer film web along its path while exerting a stretching action on it, thereby at least transversely orienting said polymer film, optionally followed by a step of fixation of the oriented polymer film;
- removing the oriented film web from the stretching device,

wherein said method further comprises the steps of

(a) marking, the latest before the transverse orientation step, at least one surface of the polymer film with a pattern of bowing marks allowing to recognize a geometric pattern;
(b) passing said at least one surface of the oriented polymer film along a determination means capable of recognizing a geometric pattern of bowing marks on said at least one surface;
(c) making said determination means recognize and receive said geometric pattern of bowing marks; and

(d) converting said geometric pattern of bowing marks recognized and received by the determination means into geometric bowing mark pattern data.

23. The method according to claim 22, further comprising the steps of

(e) comparing said geometric bowing pattern data with data obtained from former steps of recognizing geometric patterns of bowing marks and/or with data representing an optimum geometric pattern of bowing marks; and/or
(f) controlling the process of orienting the polymer film in accordance with the data comparison step.

24. The method according to claims 22 and 23, which method is a process of monoaxially orienting the polymer film in the transverse direction, or which method is a biaxial orientation process of first orienting the polymer film in the machine direction and subsequently orienting the polymer film in the transverse direction, or which method is a biaxial orientation process of first orienting the polymer film in the transverse direction and subsequently orienting the polymer film in the machine direction.

25. The method according to any of the claims 22 to 24, which method comprises any one or several or all of the features claimed in claims 4 to 12.

**Patentansprüche**

1. Verfahren zum Bestimmen des Bowing-Werts einer orientierten Polymer-Folie im Verlauf eines Verfahrens des Orientierens der Polymer-Folie wenigstens in Quer-Richtung, und ohne Unterbrechung des Verfahrens, auf einer Anlage zum Orientieren der Folie wenigstens in Quer-Richtung, wobei das Verfahren die folgenden Schritte umfasst:

a) Markieren wenigstens einer Oberfläche der Polymer-Folie spätestens vor dem Schritt des Orientierens in Quer-Richtung mit einem Muster aus Bowing-Markierungen, die es erlauben, ein geometrisches Muster zu erkennen;
b) Orientieren der Polymer-Folie wenigstens in Quer-Richtung;
c) Führen der wenigstens einen Oberfläche der orientierten Polymer-Folie entlang einer Bestimmungseinrichtung, die in der Lage ist, ein geometrisches Muster aus Bowing-Markierungen auf der wenigstens einen Oberfläche zu erkennen;
d) Bringen der Bestimmungseinrichtung dazu, dass sie das geometrische Muster aus Bowing-Markierungen erkennt und aufnimmt;
e) Fortsetzen und Beenden des Schritts der Orientierung in Quer-Richtung der Polymer-Folie; und
f) Umwandeln des geometrisches Musters aus Bowing-Markierungen, die durch die Bestimmungseinrichtung erkannt und aufgenommen wurden, in Daten eines geometrischen Musters aus Bowing-Markierungen.

2. Verfahren zum Bestimmen des Bowing-Werts nach Anspruch 1, wobei das Verfahren weiter die folgenden Schritte umfasst:

g) Vergleichen der Daten des geometrischen Muster aus Bowing-Markierungen mit Daten, die von früheren Schritten eines Erkennens von geometrischen Mustern von Bowing-Markierungen erhalten wurden, und/oder mit Daten, die ein optimales geometrisches Muster von Bowing-Markierungen wiedergeben; und/oder
h) Steuern des Verfahrens eines Orientierens der Polymer-Folie in Übereinstimmung mit dem Daten-Vergleichsschritt.

3. Verfahren zum Bestimmen des Bowing-Wertes nach Anspruch 1 oder Anspruch 2, wobei das Verfahren ein Verfahren eines monoaxialen Orientierens der Polymer-Folie in Quer-Richtung ist, oder wobei das Verfahren ein biaxiales Orientierungs-Verfahren des Orientierens der Polymer-Folie zuerst in der Maschinen-Richtung und der anschließenden Orientierung der Polymer-Folie in der Quer-Richtung ist; oder wobei das Verfahren ein Verfahren einer biaxialen Orientierung mit Orientierung der Polymer-Folie zuerst in der Quer-Richtung und anschließender Orientierung der Polymer-Folie in der Maschinen-Richtung ist, oder wobei das Verfahren ein biaxiales Orientierungs-Verfahren einer gleichzeitigen Orientierung der Polymer-Folie sowohl in Maschinen-Richtung als auch in Quer-Richtung ist.

4. Verfahren zum Bestimmen des Bowing-Wertes nach irgendeinem der Ansprüche 1 bis 3, worin der Markierungs-Schritt durchgeführt wird mit wenigstens einer Markierung, die durch optische Mittel erkennbar ist.

5. Verfahren zum Bestimmen des Bowing-Werts nach irgendeinem der Ansprüche 1 bis 4, worin der Markierungs-Schritt durchgeführt wird mit einer Druckfarbe, die wenigstens einen Farbstoff umfasst, der im sichtbaren Bereich des aktinischen Lichtspektrums erkennbar ist, und/oder mit wenigstens einem Farbstoff durchgeführt wird, der im nicht-sichtbaren Bereich des aktinischen Lichtspektrums erkennbar ist, vorzugsweise im UV-Bereich des aktinischen Lichtspektrums, und/oder mit wenigstens einem Farbstoff durchgeführt wird, der durch Licht des aktinischen Lichtspektrums aktivierbar ist und Strahlung in demselben oder einem davon verschiedenen Bereich des aktinischen Lichtspektrums emittiert.

6. Verfahren zum Bestimmen des Bowing-Werts nach irgendeinem der Ansprüche 1 bis 5, worin eine separate Quelle, die Licht des aktinischen Lichtspektrums emittiert zum Aktivieren eines Farbstoffs verwendet wird, der durch Licht des aktinischen Lichtspektrums aktivierbar ist.

7. Verfahren zum Bestimmen des Bowing-Werts nach irgendeinem der Ansprüche 1 bis 3, worin der Markierungsschritt durchgeführt wird mit wenigstens einer Markierung, die durch magnetische Mittel erkennbar ist.

8. Verfahren nach irgendeinem der Ansprüche 1 bis 3 und 7, worin der Markierungsschritt durchgeführt wird mit einem magnetischen Metallpulver oder mit einem magnetischen Metall-Legierungspulver oder mit einem magnetischen Metall-/Metall-Legierungsstaub.

9. Verfahren zum Bestimmen des Bowing-Werts nach irgendeinem der Ansprüche 1 bis 8, worin das Muster aus Bowing-Markierungen ein Muster aus einer Mindestzahl von Punkten ist, die ein geometrisches Muster definieren, vorzugsweise
worin das Muster aus Bowing-Markierungen ein Muster aus wenigstens drei oder mehr Punkten ist, die eine Linie definieren, oder ein Muster aus wenigstens sechs oder mehr Punkten ist, die ein Rechteck oder ein Quadrat definieren.

10. Verfahren zum Bestimmen des Bowing-Werts nach irgendeinem der Ansprüche 1 bis 9, worin das Muster aus Bowing-Markierungen auf einer Oberfläche der Polymer-Folie aufgebracht wird, die in Quer-Richtung orientiert werden soll, vorzugsweise worin das Muster aus Bowing-Markierungen auf die obere Oberfläche der Polymer-Folie aufgebracht wird, gesehen in der Orientierungs-Betriebskonfiguration.

11. Verfahren zum Bestimmen des Bowing-Werts nach irgendeinem der Ansprüche 1 bis 10, worin eine Einrichtung zum Bestimmen optischer und/oder magnetischer Signale als Bestimmungseinrichtung verwendet wird, vorzugsweise worin ein Lichtsensor und/oder ein Magnetsensor als Bestimmungseinrichtung verwendet wird.

12. Verfahren zum Bestimmen des Bowing-Werts nach irgendeinem der Ansprüche 1 bis 11, worin die Bestimmungseinrichtung in der Lage ist, nach Erkennen und Aufnehmen des geometrischen Musters aus Bowing-Markierungen entweder das Muster in Muster-Daten umzuwandeln und/oder die aufgenommenen Daten zu speichern oder die Daten an eine Daten-Speicher- und/oder Daten-Umwandlungs- und/oder Daten-Verarbeitungseinheit zu übertragen, vorzugsweise worin die Bestimmungseinrichtung nach Erkennen und Aufnehmen des geometrischen Musters aus Bowing-Markierungen das geometrische Muster aus Bowing-Markierungen in Bowing-Markierungsmuster-Daten umwandelt und die Daten an eine Daten-Speicher- und/oder Daten-Umwandlungs- und/oder Daten-Verarbeitungseinheit überträgt.

13. Vorrichtung zum Bestimmen des Bowing-Werts einer orientierten Polymer-Folie im Verlauf eines Verfahrens des Orientierens der Polymer-Folie wenigstens in Quer-Richtung, und ohne Unterbrechung des Verfahrens, auf einer Anlage zum Orientieren der Folie wenigstens in Quer-Richtung, wobei die Vorrichtung zusätzlich zu der Anlage zum Orientieren der Polymer-Folie wenigstens in Quer-Richtung umfasst:

    a) Mittel zum Markieren wenigstens einer Oberfläche der Polymer-Folie mit einem Muster aus Bowing-Markierungen, die ein Erkennen eines geometrischen Musters erlauben;
    b) Einrichtungen zum Bestimmen des geometrischen Musters aus Bowing-Markierungen auf der wenigstens einen Oberfläche der orientierten Polymer-Folie durch Erkennen und Aufnehmen des Musters; und
    c) Einrichtungen zum Umwandeln des geometrischen Musters aus Bowing-Markierungen, die durch die Bestimmungseinrichtung erkannt und aufgenommen wurden, in Daten eines geometrischen Musters aus Bowing-Markierungen.

14. Vorrichtung nach Anspruch 13, wobei die Vorrichtung weiter umfasst:

d) Einrichtungen zum Vergleichen der Daten des geometrischen Musters aus Bowing-Markierungen mit Daten, die aus früheren Schritten des Erkennens von geometrischen Mustern von Bowing-Markierungen erhalten wurden, und/oder mit Daten, die ein optimales geometrisches Muster von Bowing-Markierungen wiedergeben; und/oder

e) Einrichtungen zum Steuern des Verfahrens einer Orientierung der Polymer-Folie in Übereinstimmung mit den Daten, die von der Daten-Vergleichseinrichtung erhalten wurden.

15. Vorrichtung nach Anspruch 13 und Anspruch 14, worin das Mittel zum Markieren ein Drucker ist, der in der Lage ist, eine Markierung aufzubringen, die durch optische Einrichtungen erkennbar ist.

16. Vorrichtung nach irgendeinem der Ansprüche 13 bis 15, worin der Drucker ein Drucker für eine Druckfarbe ist, die im sichtbaren Bereich des aktinischen Lichtspektrums erkennbar ist, und/oder ein Drucker für einen Farbstoff ist, der im nicht-sichtbaren Bereich des aktinischen Lichtspektrums erkennbar ist, vorzugsweise im UV-Bereich des aktinischen Lichtspektrums, und/oder ein Drucker für einen Farbstoff ist, der durch Licht des aktinischen Lichtspektrums aktivierbar ist und Strahlung in demselben oder in einem davon verschiedenen Bereich des aktinischen Lichtspektrums emittiert.

17. Vorrichtung nach irgendeinem der Ansprüche 13 bis 16, weiter umfassend eine separate Quelle, die Licht des aktinischen Lichtspektrums zum Aktivieren eines Farbstoffs emittiert, der durch Licht des aktinischen Lichtspektrums aktivierbar ist.

18. Vorrichtung nach den Ansprüchen 13 und 14, worin die Einrichtung zum Markieren eine Einrichtung zum Aufbringen einer Markierung ist, die durch magnetische Mittel erkennbar ist, vorzugsweise eine Einrichtung zum Aufbringen eines magnetischen Metallpulvers oder zum Aufbringen eines Metall-Legierungspulvers oder zum Aufbringen eines Metall-/Metall-Legierungsstaubs ist.

19. Vorrichtung nach irgendeinem der Ansprüche 13 bis 18, worin die Bestimmungseinrichtung eine Einrichtung zum Bestimmen optischer und/oder magnetischer Signale ist, vorzugsweise worin die Bestimmungseinrichtung ein Lichtsensor und/oder Magnetsensor ist.

20. Vorrichtung nach irgendeinem der Ansprüche 13 bis 19, weiter umfassend eine Daten-Speichereinheit und/oder eine Daten-Umwandlungseinheit und/oder eine Daten-Verarbeitungseinheit.

21. Vorrichtung nach irgendeinem der Ansprüche 13 bis 20, weiter umfassend Mittel zum Steuern des Gesamtverfahrens auf der Basis der Daten, die von der Bestimmungseinrichtung und/oder von der Daten-Verarbeitungseinrichtung erhalten werden.

22. Verfahren zum Orientieren einer Polymer-Folie wenigstens in Quer-Richtung, wobei das Verfahren die folgenden Schritte umfasst:

- Einführen einer vorbereiteten Polymer-Folie in eine Reck-Vorrichtung, die die Bewegung einer Polymer-Folie entlang eines Längsweges in der Vorrichtung erlaubt, wobei diese orientiert wird;
- Vorsehen von Heiz-Einrichtungen entlang dem Längsweg in der Vorrichtung, die in der Lage sind, die Temperatur einzustellen, die für den Orientierungsschritt benötigt wird, und Zulassen, dass diese die Polymer-Folie erwärmen, während diese die Heizeinrichtungen passiert;
- Ermöglichen eine Zahl von Paaren von Klammer-Systemen, die dafür angepasst sind, entlang dem Längsweg auf zwei Führungsschienen zu laufen, die sich im Wesentlichen längs der Reck-Vorrichtung und im Wesentlichen parallel zu der Bewegung der Polymer-Folie auf deren beiden Seiten erstrecken und in der Lage sind, die Polymer-Folie an ihren beiden einander gegenüberliegenden Kanten zu ergreifen, die Polymer-Folie an ihren beiden einander gegenüberliegenden Seiten zu ergreifen und die Polymer-Folie entlang ihrem Weg zu bewegen, wobei sie eine Reck-Tätigkeit auf diese ausüben, wodurch sie die Polymer-Folie wenigstens in Quer-Richtung orientieren, gegebenenfalls gefolgt von einem Schritt des Fixierens der orientierten Polymer-Folie;
- Entfernen der orientierten Polymer-Folie von der Reck-Vorrichtung;

worin das Verfahren weiter die folgenden Schritte umfasst:

a) Markieren mindestens einer Oberfläche der Polymer-Folie spätestens vor dem Schritt des Orientierens in Quer-Richtung mit einem Muster aus Bowing-Markierungen, die es erlauben, ein geometrisches Muster zu erkennen;

b) Führen der wenigstens einen Oberfläche der orientierten Polymer-Folie entlang einer Bestimmungseinrichtung, die in der Lage ist, ein geometrisches Muster aus Bowing-Markierungen auf der wenigstens einen Oberfläche zu erkennen;

c) Bringen der Bestimmungseinrichtung dazu, dass sie das geometrische Muster aus Bowing-Markierungen erkennt und aufnimmt; und

d) Umwandeln des geometrischen Musters aus Bowing-Markierungen, die von der Bestimmungseinrichtung erkannt und aufgenommen wurden, in Daten eines geometrischen Musters aus Bowing-Markierungen.

**23.** Verfahren nach Anspruch 22, welches weiter die folgenden Schritte umfasst:

e) Vergleichen der Daten des geometrischen Musters aus Bowing-Markierungen mit Daten, die von früheren Schritten des Erkennens von geometrischen Mustern aus Bowing-Markierungen erhalten wurden, und/oder mit Daten, die ein optimales geometrisches Muster aus Bowing-Markierungen wiedergeben; und/oder

f) Steuern des Verfahrens eines Orientierens der Polymer-Folie in Übereinstimmung mit dem Daten-Vergleichsschritt.

**24.** Verfahren nach den Ansprüchen 22 und 23, wobei das Verfahren ein Verfahren zum monoaxialen Orientieren der Polymer-Folie in der Quer-Richtung ist, oder wobei das Verfahren ein Verfahren einer biaxialen Orientierung mit einer ersten Orientierung der Polymer-Folie in der Maschinen-Richtung und einer anschließenden Orientierung der Polymer-Folie in Quer-Richtung ist, oder wobei das Verfahren ein biaxiales Orientierungs-Verfahren mit einem ersten Orientieren der Polymer-Folie in der Quer-Richtung und einem anschließenden Orientieren der Polymer-Folie in der Maschinen-Richtung ist.

**25.** Verfahren nach irgendeinem der Ansprüche 22 bis 24, wobei das Verfahren irgendeines oder einige oder alle Merkmale umfasst, die in den Ansprüchen 4 bis 12 beansprucht sind.

## Revendications

**1.** Procédé pour déterminer la valeur de cambrure d'un film polymère orienté au cours d'un processus, et sans interrompre ledit processus, d'orientation au moins transversale dudit film polymère sur une installation pour obtenir une orientation au moins transversale dudit film, ledit procédé comprenant les étapes au cours desquelles

(a) on marque, au plus tard avant l'étape d'orientation transversale, au moins une surface du film polymère avec un motif de repères de cambrure qui permet d'identifier un motif géométrique ;

(b) on oriente ledit film polymère au moins dans la direction transversale ;

(c) on fait passer ladite au moins une surface du film polymère orienté le long d'un moyen de détermination capable d'identifier un motif géométrique de repères de cambrure sur ladite au moins une surface ;

(d) on fait en sorte que ledit moyen de détermination identifie et capte ledit motif géométrique de repères de cambrure ;

(e) on poursuit et on achève ladite étape d'orientation transversale de film polymère ; et

(f) on convertit ledit motif géométrique de repères de cambrure identifié et capté par le moyen de détermination en données de motif géométrique de repères de cambrure.

**2.** Procédé de détermination de la valeur de cambrure selon la revendication 1, ledit procédé comprenant en outre les étapes au cours desquelles :

(g) on compare lesdites données de motif géométrique de cambrure à des données obtenues à partir d'étapes antérieures d'identification de motifs géométriques de repères de cambrure et/ou à des données représentant un motif géométrique optimal de repères de cambrure ; et/ou

(h) on règle le processus d'orientation du film polymère en fonction de l'étape de comparaison de données.

**3.** Procédé de détermination de la valeur de cambrure selon la revendication 1 ou 2, ledit processus étant un processus d'orientation monoaxe du film polymère dans la direction transversale, ou bien ledit processus étant un processus d'orientation biaxe d'abord d'orientation du film polymère dans le sens machine et ensuite d'orientation du film polymère en direction transversale, ou bien ledit processus étant un processus d'orientation biaxe d'abord d'orientation du film polymère en direction transversale et ensuite d'orientation du film polymère dans le sens machine, ou

17

bien ledit processus étant un processus d'orientation biaxe d'orientation simultanée du film polymère à la fois dans le sens machine et en direction transversale.

4. Procédé de détermination de la valeur de cambrure selon l'une quelconque des revendications 1 à 3, dans lequel l'étape de marquage est mise en oeuvre avec au moins un repère qui peut être identifié par un moyen optique.

5. Procédé de détermination de la valeur de cambrure selon l'une quelconque des revendications 1 à 4, dans lequel l'étape de marquage est mise en oeuvre avec une encre d'impression comprenant au moins un colorant qui peut être identifié dans la plage visible du spectre de lumière actinique et/ou avec au moins un colorant qui peut être identifié dans la plage non visible du spectre de lumière actinique, de préférence dans la plage de l'ultraviolet du spectre de lumière actinique, et/ou avec au moins un colorant qui peut être activé par la lumière du spectre de lumière actinique et émettant un rayonnement dans la même plage ou dans une plage différente du spectre de lumière actinique.

6. Procédé de détermination de la valeur de cambrure selon l'une quelconque des revendications 1 à 5, dans lequel on utilise une source séparée d'émission de lumière du spectre de lumière actinique pour activer un colorant qui peut être activé par la lumière du spectre de lumière actinique.

7. Procédé de détermination de la valeur de cambrure selon l'une quelconque des revendications 1 à 3, dans lequel l'étape de marquage est mise en oeuvre avec au moins un repère qui peut être identifié par un moyen magnétique.

8. Procédé de détermination de la valeur de cambrure selon l'une quelconque des revendications 1 à 3 et 7, dans lequel l'étape de marquage est mise en oeuvre avec une poudre magnétique métallique ou avec une poudre magnétique d'alliage métallique ou avec une poussière magnétique métallique/d'alliage métallique.

9. Procédé de détermination de la valeur de cambrure selon l'une quelconque des revendications 1 à 8, dans lequel le motif de repères de cambrure est un motif d'un nombre minimal de points définissant un motif géométrique, de préférence dans lequel le motif de repères de cambrure est un motif d'au moins trois points ou plus définissant une ligne ou est un motif d'au moins six points ou plus définissant un rectangle ou un carré.

10. Procédé de détermination de la valeur de cambrure selon l'une quelconque des revendications 1 à 9, dans lequel le motif de repères de cambrure est appliqué sur une surface du film polymère à orienter en direction transversale, de préférence dans lequel le motif de repères de cambrure est appliqué sur la surface supérieure du film polymère, lorsqu'on regarde dans la configuration de l'opération d'orientation.

11. Procédé de détermination de la valeur de cambrure selon l'une quelconque des revendications 1 à 10, dans lequel on utilise un moyen pour déterminer des signaux optiques et/ou magnétiques pour faire office de moyen de détermination, de préférence dans lequel on utilise un capteur optique et/ou un capteur magnétique comme moyen de détermination.

12. Procédé de détermination de la valeur de cambrure selon l'une quelconque des revendications 1 à 11, dans lequel le moyen de détermination est capable, après avoir identifié et après avoir capté le motif géométrique de repères de cambrure, soit de convertir le motif en données de motif et/ou de mémoriser les données captées, soit de transmettre les données à une unité de mémorisation de données et/ou à une unité de conversion de données et/ou à une unité de traitement de données, de préférence dans lequel le moyen de détermination, après avoir identifié et après avoir capté ledit motif géométrique de repères de cambrure, convertit ledit motif géométrique de repères de cambrure en données de motif de repères de cambrure et transmet lesdites données à une unité de mémorisation de données et/ou à une unité de conversion de données et/ou à une unité de traitement de données.

13. Appareil pour déterminer la valeur de cambrure d'un film polymère orienté au cours d'un processus, et sans interrompre ledit processus, d'orientation au moins transversale dudit film polymère sur une installation pour obtenir une orientation au moins transversale dudit film, ledit appareil comprenant, en plus de l'équipement pour l'orientation au moins transversale dudit film polymère :

   (a) un moyen pour marquer au moins une surface dudit film polymère avec un motif de repères de cambrure afin d'identifier un motif géométrique ;
   (b) un moyen pour déterminer, sur ladite au moins une surface du film orienté, ledit motif géométrique de repères de cambrure par le fait d'identifier et de capter ledit motif ; et

(c) un moyen pour convertir ledit motif géométrique de repères de cambrure qui a été identifié et qui a été capté par le moyen de détermination, en données de motif géométrique de repères de cambrure.

14. Appareil selon la revendication 13, ledit appareil comprenant en outre :

(d) un moyen pour comparer lesdites données de motif géométrique de cambrure à des données obtenues à partir d'étapes antérieures d'identification de motifs géométriques de repères de cambrure et/ou à des données représentant un motif géométrique optimal de repères de cambrure ; et/ou
(e) un moyen pour régler le processus d'orientation du film polymère en fonction des données captées par le moyen de comparaison de données.

15. Appareil selon les revendications 13 et 14, dans lequel le moyen de marquage est une imprimante capable d'appliquer un repère qui peut être identifié par un moyen optique.

16. Appareil selon l'une quelconque des revendications 13 à 15, dans lequel l'imprimante est une imprimante pour une encre d'impression qui peut être identifiée dans la plage visible du spectre de lumière actinique et/ou une imprimante pour un colorant qui peut être identifié dans la plage non visible du spectre de lumière actinique, de préférence dans la plage de l'ultraviolet du spectre de lumière actinique, et/ou une imprimante pour un colorant qui peut être activé par la lumière du spectre de lumière actinique et émettant un rayonnement dans la même plage ou dans une plage différente du spectre de lumière actinique.

17. Appareil selon l'une quelconque des revendications 13 à 16, comprenant en outre une source séparée d'émission de lumière du spectre de lumière actinique pour activer un colorant qui peut être activé par la lumière du spectre de lumière actinique.

18. Appareil selon les revendications 13 et 14, dans lequel le moyen de marquage est un moyen pour appliquer un repère qui peut être identifié par un moyen magnétique, de préférence pour appliquer une poudre magnétique métallique ou pour appliquer une poudre d'alliage métallique ou pour appliquer une poussière métallique/d'alliage métallique.

19. Appareil selon l'une quelconque des revendications 13 à 18, dans lequel le moyen de détermination est un moyen pour déterminer des signaux optiques et/ou magnétiques, de préférence dans lequel le moyen de détermination est un capteur optique et/ou un capteur magnétique.

20. Appareil selon l'une quelconque des revendications 13 à 19, comprenant en outre une unité de mémorisation de données et/ou une unité de conversion de données et/ou une unité de traitement de données.

21. Appareil selon l'une quelconque des revendications 13 à 20, comprenant en outre un moyen pour régler le processus global sur base des données captées par le moyen de détermination et/ou par l'unité de traitement de données.

22. Procédé pour orienter une bande de film polymère au moins en direction transversale, ledit procédé comprenant les étapes au cours desquelles

- on alimente une bande de film polymère préparée dans un dispositif d'étirement qui permet à la bande de film polymère de se déplacer le long d'une voie longitudinale dans ledit dispositif, lors de son orientation ;
- on procure un moyen de chauffage le long de ladite voie longitudinale dans ledit dispositif, capable d'établir la température requise pour l'étape d'orientation et qui permet de chauffer la bande de film polymère lors du passage de cette dernière par le moyen de chauffage ;
- on permet à plusieurs paires de systèmes de pinces conçus pour s'étendre le long de ladite voie longitudinale sur deux rails de guidage s'étendant essentiellement en direction longitudinale du dispositif d'étirage et essentiellement parallèlement à la bande de film polymère en mouvement, sur les deux côtés de cette dernière et capable de saisir ledit film polymère à ses deux bords opposés, de saisir ladite bande de film polymère sur ses deux côtés opposés et de déplacer ladite bande de film polymère le long de sa voie tout en y exerçant une action d'étirage, pour ainsi orienter ledit film polymère au moins en direction transversale, une étape de fixation du film polymère orienté y faisant suite de manière facultative ;
- on retire la bande de film orienté du dispositif d'étirage,

dans lequel ledit procédé comprend en outre les étapes au cours desquelles

(a) on marque, au plus tard avant l'étape d'orientation transversale, au moins une surface du film polymère avec un motif de repères de cambrure qui permet d'identifier un motif géométrique ;

(b) on fait passer ladite au moins une surface du film polymère orienté le long d'un moyen de détermination capable d'identifier un motif géométrique de repères de cambrure sur ladite au moins une surface ;

(c) on fait en sorte que ledit moyen de détermination identifie et capte ledit motif géométrique de repères de cambrure ; et

(d) on convertit ledit motif géométrique de repères de cambrure identifié et capté par le moyen de détermination en données de motif géométrique de repères de cambrure.

**23.** Procédé selon la revendication 22, comprenant en outre les étapes au cours desquelles

(e) on compare lesdites données de motif géométrique de cambrure à des données obtenues à partir d'étapes antérieures d'identification de motifs géométriques de repères de cambrure et/ou à des données représentant un motif géométrique optimal de repères de cambrure ; et/ou

(f) on règle le processus d'orientation du film polymère en fonction de l'étape de comparaison de données.

**24.** Procédé selon les revendications 22 et 23, ledit processus étant un processus d'orientation monoaxe du film polymère dans la direction transversale, ou bien ledit processus étant un processus d'orientation biaxe d'abord d'orientation du film polymère dans le sens machine et ensuite d'orientation du film polymère en direction transversale, ou bien ledit processus étant un processus d'orientation biaxe d'abord d'orientation du film polymère en direction transversale et ensuite d'orientation du film polymère dans le sens machine.

**25.** Procédé selon l'une quelconque des revendications 22 à 24, ledit procédé comprenant l'une quelconque des caractéristiques revendiquées dans les revendications 4 à 12 ou plusieurs de ces caractéristiques ou la totalité de celles-ci.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0764678 A2

**Non-patent literature cited in the description**

- **O OK PARK et al.** Analysis of the bowing phenomenon in the tenter process of biaxially oriented polypropylene film. *Korean J. Chem. Eng.,* 2001, vol. 18 (3), 317-321